# EUROPEAN PATENT SPECIFICATION

(11) **EP 3 351 428 B1**
(45) Date of publication and mention of the grant of the patent: **21.08.2019**
(21) Application number: 17176181.0
(22) Date of filing: 15.06.2017
(51) Int. Cl.: B60P 7/08, B60P 3/075

(54) **AN AUTOMATIC STRAP RETRACTING MECHANISM FOR WHEEL RESTRAINT DEVICES**
AUTOMATISCHER GURTEINZUGSMECHANISMUS FÜR RADRÜCKHALTEVORRICHTUNGEN
MÉCANISME DE RÉTRACTION DE SANGLE AUTOMATIQUE POUR DES DISPOSITIFS DE RETENUE DE ROUES

(30) Priority: 21.01.2017 CN 201710048105
(43) Date of publication of application: 25.07.2018
(73) Proprietor: ZheJiang TOPSUN Logistic Control Co., Ltd., Taizhou, Zhejiang 317600 (CN)
(72) Inventor: RUAN, Buqin, Taizhou City, Zhejiang 317600 (CN)
(74) Representative: Elzaburu S.L.P.

(56) References cited:
- WO-A1-2015/061841
- US-A1- 2013 216 324

## Description

### Related applications

This application claims benefit to Chinese Patent Application No. CN201710048105.8, filed January 21, 2017.

### Background of the invention

### Field of Invention

The present invention pertains to the technical field of vehicle auxiliary equipment, and more particularly to an automatic strap retracting mechanism for wheel restraint devices.

### Related art

In the process of shipping vehicles on land or by sea, vehicles need to be secured. A wheel restraint device is a device which secures the tires of a vehicle, so as to prevent the vehicle from moving freely during the transportation. In general, it comprises a shell and a fastening strap. A hook used to hook to the carrier is connected onto the shell. The fastening strap is connected to the reel of the shell and is connected with a hook. The fastening strap is pulled out, then encircles the wheel and hooks to the carrier. Hence, the wheel is held firm and secured through the fastening strap.

One prior art restraint device for transporting vehicles discloses that one end of the fastening strap has an end hook, and the end hook is arranged in the cover of a flexible wedge block. The strap coiling and securing device consists of the strap coiling shell formed by two side plates and a curved plate, a flexible pad installed on the curved plate, and the reel, pawl, strap guiding shaft as well as a underneath retractile hook installed on the two side plates. A ratchet is fixedly connected to the reel. In the retractile hook, the first link, which is hinged at the two side plates, and the second link hinged with a hook are hinge-connected through a strap passing shaft. The other end of the fastening strap, which clings to the strap guiding shaft and is arranged on the strap passing shaft, is fixed onto the reel. After use of the restraint device, it is required to retract the fastening strap which has been pulled out. Namely, it is required to wind in the reel manually to turn the reel and tighten the fastening strap. Not only is the operation complicated, but also the strap retracting speed is very slow.

Document US 2013/0216324 discloses an automatic strap retracting mechanism and represents the closest prior art to the current invention.

### Summary of the invention

One objective of one embodiment of the present invention is to avoid the issues stated above in the prior art, and to provide an automatic strap retracting mechanism for wheel restraint devices. One embodiment of the present automatic strap retracting mechanism for wheel restraint devices makes the wheel restraint device more convenient to use.

One objective of one embodiment of the present invention can be achieved by the following technical proposal:
An automatic strap retracting mechanism for wheel restraint devices comprises a shell. A reel used to wind in and retract the fastening strap is rotatably connected inside the shell, a ratchet is fixed onto the reel, and the ratchet tooth surfaces consist of locating surface used to lock the direction of strap loosening, as well as guiding surface used to lock the direction of strap tightening. A locking piece is also hinged to the shell, and the locking piece comprises a pawl which can abut and get locked on the locating surfaces. It is characterized in that:
The automatic strap retracting mechanism comprises a coil spring that is connected to the reel and can drive the reel to rotate in the direction of strap tightening to wind in and retract the fastening strap. The locking piece also comprises a locking rod fixed to the pawl, and an included angle is formed between the locking rod and the pawl. When the pawl detaches from the locating surface and the fastening strap is pulled out, the locking piece can swing to allow the locking rod to abut on the guiding surface.

The fastening strap is wound on the reel and located inside the shell. When restraining the wheel, the shell fixedly abuts on the bottom of one side of the wheel tread surface. The fastening strap encircles the wheel tread surface and gets fixed to the carrier on the other side of the wheel tread surface. By winding in the reel in the direction of strap retracting, then, the locking rod detaches from the ratchet under the act of the gravity, and the pawl abuts on the ratchet. Therefore, when the fastening strap is tightened and the ratchet rotates in the direction of strap loosening, the pawl can abut on the locating surface of the ratchet tooth immediately, so as to prevent the fastening strap from loosening and releasing. This achieves locking and securing the ratchet. After use, the fastening strap will be removed from the wheel, and under the action of the coil spring, the reel will automatically rotate in the direction of strap retracting. In addition, the pawl will not lock the ratchet, until the fastening strap is completely wound on the reel. No manual strap retracting is required, and hence the operation of retracting the strap is easy and quick. When it is required to use the wheel restraint device again, the shell is placed into the state of strap pulling. In this state, under the action of the gravity, the pawl detaches from the ratchet, and the locking rod abuts on the ratchet. In addition, when the reel rotates in the direction of strap loosening, the fastening strap is pulled out, and at this point, the locking rod will not lock the ratchet. When the fastening strap is pulled out the appropriate length and pulling stops, the coil spring applies forces to the reel, making the reel tend to rotate in the direction of strap retracting. At this point, the locking rod can abut on the guiding surface of the ratchet tooth immediately, so as to lock the ratchet and prevent the reel from retracting the fastening strap again under the action of the coil spring. Therefore, the operation of pulling out the fastening strap is also easy and quick.

In one embodiment of the automatic strap retracting mechanism for wheel restraint devices, a curved wedge plate used to abut on the vehicle wheel tread surface is fixed to the shell. When the curved wedge plate is placed facing downward, the locking rod is below the pawl. The locking piece also comprises a counterweight block which can make the locking rod abut on the guiding surface of the ratchet, when the ratchet rotates in the direction of strap retracting. When the fastening strap tightly holds the wheel, the concave surface of the curved wedge plate can fit the wheel tread surface. When the curved wedge plate is placed facing downward, it is in the state of the operation for pulling out the strap. The counterweight block is the impetus for the locking piece to swing. Under the action of the counterweight block, the locking rod swings so that the pawl detaches from the ratchet. In addition, the locking rod abuts on the ratchet, so that once the reel tends to rotate in the direction of strap retracting; it abuts on the guiding surface in time to lock the ratchet.

In one embodiment of the automatic strap retracting mechanism for wheel restraint devices, the locking piece comprises an axial part. Both ends of the axial part are rotatably connected to the inner wall of the shell, and the axial part is parallel to the reel. The locking rod and the pawl are located on the end of the axial part. The counterweight block is fixed to the axial part, and when the curved wedge plate is placed facing downward, the locking rod and the counterweight block are located respectively on the two sides of the vertical plane containing the axial part. Under the action of the counterweight block, the locking rod tends to swing upward and abuts on the ratchet. The axial part is the place containing the axis line around which the locking piece swings. When the curved wedge plate is placed facing downward, the locking rod and the counterweight block are located respectively on the two sides of the vertical plane containing the axial part. Under the action of the gravity of the counterweight block, the locking rod tends to swing upward and abuts on the ratchet.

In one embodiment of the automatic strap retracting mechanism for wheel restraint devices, a curved wedge plate used to abut on the vehicle wheel tread surface is fixed to the shell. When the curved wedge plate is placed facing downward, the locking rod is below the pawl. The locking piece also comprises a counterweight rod, and both ends of the counterweight rod are rotatably connected to the inner wall of the shell. The locking rod and the pawl are both fixed to the end of the counterweight rod, and the central part of the counterweight rod bends to form a protruding counterweight part. When the curved wedge plate is placed facing downward, the locking rod and the counterweight part are respectively located on the two sides of the vertical plane containing the axis line linking the ends of the counterweight rod. This is an alternative structure of the locking piece. It is directly and rotatably connected to the shell through the counterweight rod, and the counterweight rod bends to form the counterweight part. It also has the effect of driving the locking rod to abut on the ratchet.

In one embodiment of the automatic strap retracting mechanism for wheel restraint devices, on the locking rod, there is a curved pushing surface located on the side of the locking rod, and an abutting surface located on the end of the locking rod. When the curved wedge plate is placed facing downward and the ratchet rotates in the direction of strap loosening, the locating surface of the ratchet tooth can push the curved pushing surface downward. When the ratchet rotates in the direction of strap retracting, the guiding surface of the ratchet tooth can abut on the abutting surface of the locking rod. When the curved wedge plate is placed facing downward, the end of the locking rod is located on the lower side of the ratchet. At this point, the curved pushing surface faces upward, so when the ratchet rotates in the direction of strap loosening, the locating surface of the ratchet tooth can push the curved pushing surface downward, making the ratchet tooth passes the end of the locking rod, and the fastening strap is continuously pulled out. However, after the fastening strap is pulled out in place, and when the ratchet rotates in the direction of strap retracting under the action of the coil spring, the locking rod can abut on the guiding surface of the ratchet tooth in time, so as to lock the ratchet and prevent the fastening strap from being retracted again. This makes the operation of pulling out the fastening strap more convenient.

In one embodiment of the automatic strap retracting mechanism for wheel restraint devices, the locking rod is made of plastic or rubber, and the locking rod is sleeved over and fixed to the end of the axial part. The pawl and the axial part are of an integral structure. Since the locating surface of the ratchet tooth repeatedly pushes the locking rod downward during the process of pulling out the fastening strap, under the action of the counterweight block, the curved pushing surface of the locking rod repeatedly collides with the locating surface of the ratchet tooth. A locking rod made of plastic or rubber can reduce the noise. Of course, because, when the locking rod abuts on the guiding surface to lock the ratchet, the force to rotate the ratchet is only provided by the coil spring. Therefore, the force that the ratchet applies to the locking rod is small, and materials such as plastic or rubber can meet the strength requirement of the locking rod. However, when the fastening strap is tightly holding the wheel, it is required to position the whole vehicle, and at this point, the ratchet is positioned by the pawl, so the pawl needs to be integrated with the axial part and made of metal, having a relatively high strength.

In one embodiment of the automatic strap retracting mechanism for wheel restraint devices, both ends of the axial part are inserted in rotating sleeves. Mounting holes are arranged on the side walls of the shell, and the rotating sleeves are rotatably connected inside the mounting holes. This reduces the resistive force when the locking piece swings, so as to allow the locking piece to swing freely under the action of the gravity of the counterweight block.

In one embodiment of the automatic strap retracting mechanism for wheel restraint devices, the shell comprises two half shells, and both half shells comprise curved base plates and side plates, which are fixed to the base plates. The two half shells are fixed and connected to each other by bolts, and the two base plates abut on each other to form a tire blocking plate. The curved wedge plate is fixed onto the tire blocking plate, and the reel is rotatably connected to the two side plates. The shell is used to install the parts such as the reel, the fastening strap, the curved wedge plate and etc., so the structure of two half shells fixed connected to each other is adopted. It is easy for the assembly.

In one embodiment of the automatic strap retracting mechanism for wheel restraint devices, both ends of the reel stretches out of the side plates, and a connecting sleeve is sleeved over and fixed to one of the stretched ends. A cover is also fixed to one side plate, and the coil spring is arranged inside the cover. One end of the coil spring is fixed to the connecting sleeve, and the other end is fixed to the inner circumferential wall of the cover. The coil spring is wound inside the cover, making the structure compact. When the fastening strap is pulled out, the coil spring is wound and taken up and produces elastic force. Therefore, when it is required to retract the strap, the coil spring can achieve an automatic rotation of the reel by the elastic force.

In one embodiment of the automatic strap retracting mechanism for wheel restraint devices, a connecting opening is arranged on the connecting sleeve. There is a connecting bulge on the inner wall of the cover, and an L-shaped slot is arranged on the connecting bulge. Both ends of the coil spring are bended into hook shapes, one end of the coil spring hooks in the connecting opening of the connecting sleeve, and the other end hooks in the L-shaped slot of the connecting bulge. This makes the installation of the coil spring more convenient, and the reliability of the connection is higher.

Compared to the prior art, one embodiment of the present automatic strap retracting mechanism for wheel restraint devices has the following advantages:
1. After use, the fastening strap will be removed from the wheel, and under the action of the coil spring, the reel will automatically rotate in the direction of strap retracting. In addition, the pawl will not lock the ratchet, until the fastening strap is completely wound on the reel. No manual strap retracting is required, and hence the operation of retracting the strap is easy and quick.
2. When the fastening strap is pulled out the appropriate length and pulling stops, the locking rod can abut on the guiding surface of the ratchet tooth immediately, so as to lock the ratchet and prevent the reel from retracting the fastening strap again under the action of the coil spring. Therefore, the operation of pulling out the fastening strap is also easy and quick.
3. Since the locking rod is made of plastic or rubber, not only is the strength requirement met, but also the noise is reduced when it collides with the locating surface of the ratchet tooth.

### Brief description of the drawings

Fig. 1 is a partial perspective view of one embodiment of the wheel restraint device.
Fig. 2 is a partial perspective view of one embodiment of the wheel restraint device with the shell not installed yet.
Fig. 3 is a sectional view of one embodiment of the wheel restraint device while restraining the wheel or retracting the strap.
Fig. 4 is a sectional view of one embodiment of the wheel restraint device while the fastening strap is pulled out.
Fig. 5 is a detailed view of Section A in Fig. 4.
Fig. 6 is a sectional view of one embodiment of the wheel restraint device from another perspective.
Fig. 7 is a sectional view of the cover of one embodiment of the wheel restraint device.

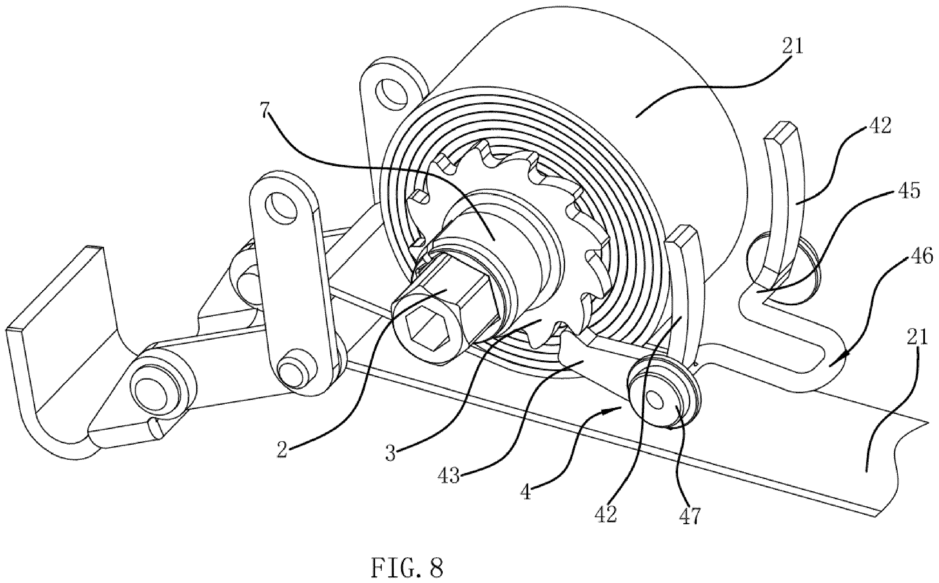

Fig. 8 is a partial perspective view of the wheel restraint device of the second embodiment, with the shell not installed yet.

### Detailed description of the invention

The embodiments of this invention will be described below and the technical solutions of the invention will be further illustrated in connection with the accompanying figures. However, the present invention shall not be limited to these embodiments.

### First embodiment

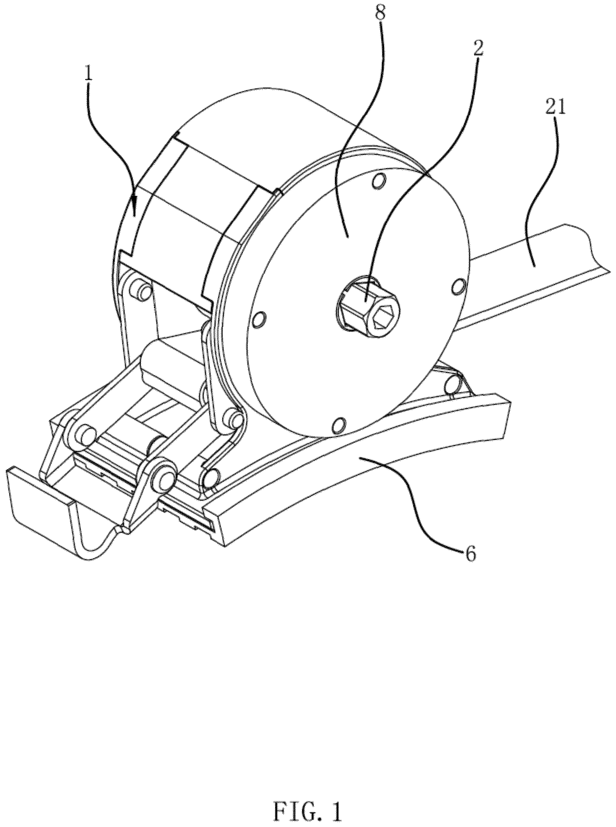

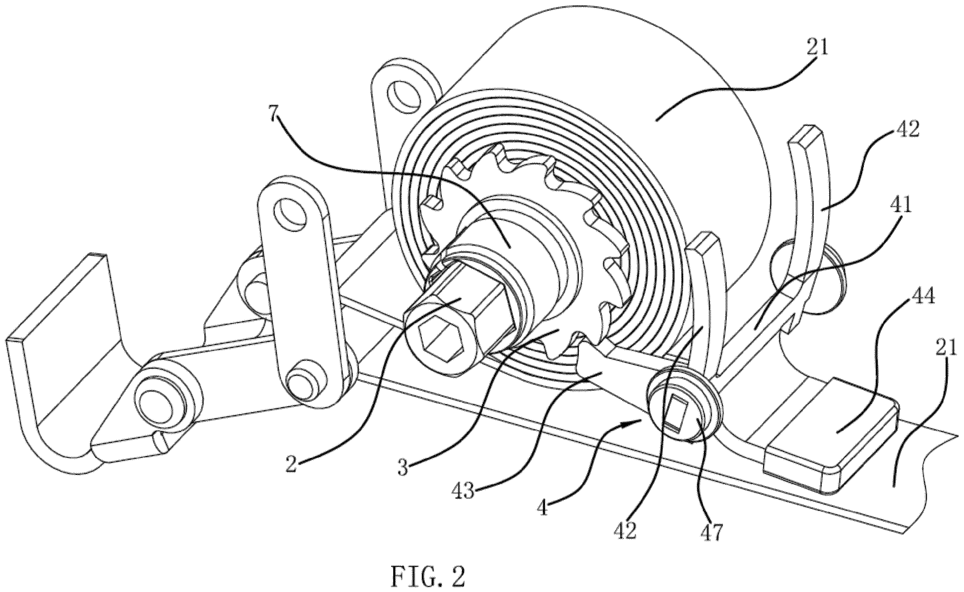

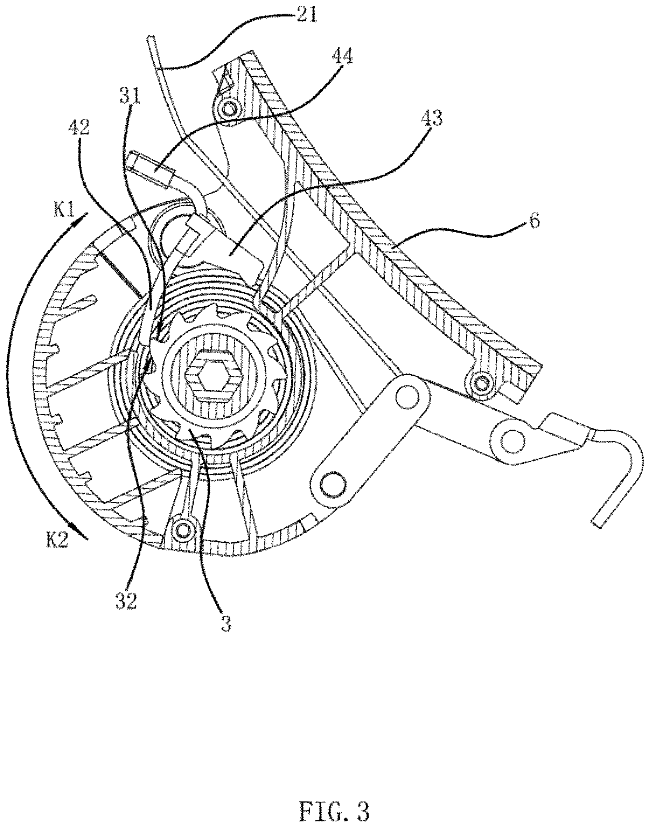

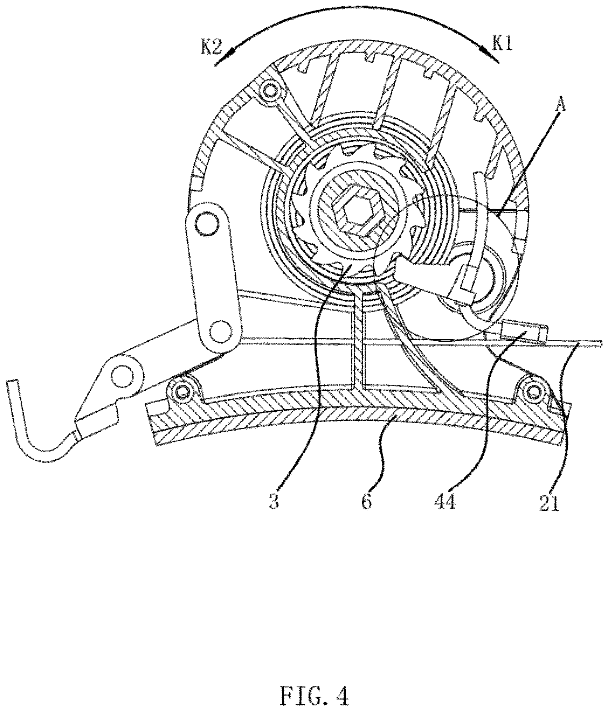

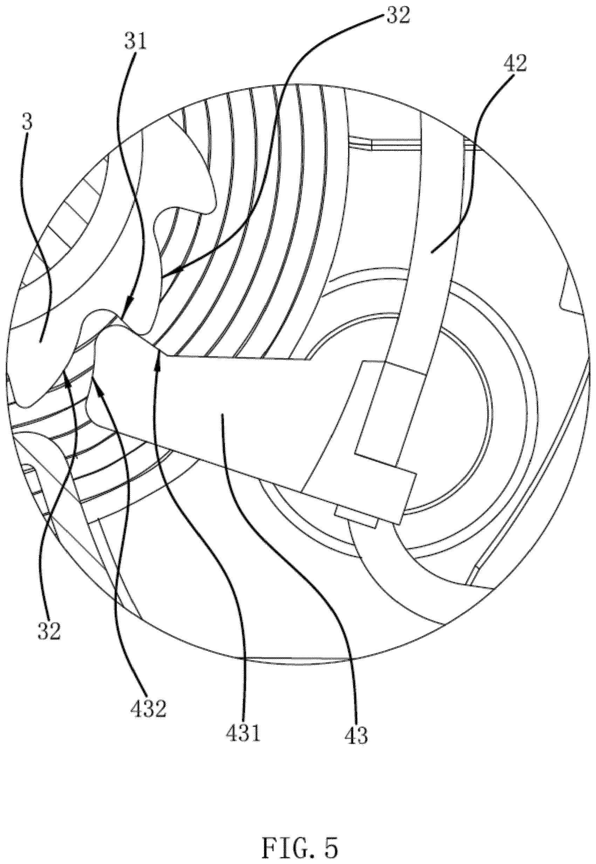

As shown in Fig. 1 and Fig. 2, in an automatic strap retracting mechanism for wheel restraint device, the wheel restraint device comprises a shell (1). A reel (2) is rotatably connected to the shell (1), and a fastening strap (21) is wound on the reel (2). The fastening strap (21) is located inside the shell (1). A ratchet (3) is fixed to the reel (2), and the ratchet tooth of the ratchet (3) has a locating surface (31) and a guiding surface (32). A locking piece (4) is hinged to the shell (1). The locking piece (4) comprises a pawl (42), a locking rod (43) and a counterweight block (44), and the three parts are fixed to each other. An inclusion angle forms between the locking rod (43) and the pawl (42), and the counterweight block (44) and the locking rod (43) are located on the two sides of the pawl (42). On the locking rod (43), there is a curved pushing surface (431) and an abutting surface (432) respectively. The curved pushing surface (431) is located in the side edge of the locking rod (43), and the abutting surface (432) is located on the end of the locking rod (43). As shown in Fig. 3, which shows the state of the shell (1) when the fastening strap (21) tightly holds the wheel, in this state, under the action of the gravity of the counterweight block (44), the locking rod (43) detaches from the ratchet (3), and the pawl (42) abuts on the ratchet (3). Here direction "K1" is the direction that the locating surface (31) faces, namely, the direction in which the ratchet (3) rotates when loosening the strap. Direction "K2" is the direction that the guiding surface (32) faces, namely, the direction in which the ratchet (3) rotates when retracting the strap. When the reel (2) rotates in direction "K2" the pawl (42) abuts on the guiding surface (32) and slides along the guiding surface (32). Namely, the pawl (42) is unable to lock the ratchet (3). After the fastening strap (21) tightly holds the wheel, the wheel produces a reaction force against the fastening strap (21), making the reel (2) tend to rotate in direction "K1" At this point, the pawl (42) can abut on the locating surface (31) of the ratchet tooth, so as to lock the ratchet (3). Namely, locking the wheel by the fastening strap (21) is achieved. A coil spring (5) is also connected to the reel (2) of the present wheel restraint device. When the fastening strap (21) is pulled out, the coil spring (5) produces a force against the reel (2). Namely, Fig. 3 also shows the state of the shell (1) when the strap is retracted. When the strap is retracted, the fastening strap (21) detaches from the wheel from its side. Since the force from the wheel is lost, the force produced by the coil spring (5) against the reel (2) makes the reel (2) able to rotate in direction "K2" allowing the reel (2) to automatically wind and take up the fastening strap (21). As shown in Fig. 4 and Fig. 5, which shows the state of the shell (1) when the fastening strap (21) is pulled out, in this state, under the action of the gravity of the counterweight block (44), the pawl (42) detaches from the ratchet (3), and the curved pushing surface (431) of the locking rod (43) tends to abut on the locating surface (31) of the ratchet tooth. At this point, the reel (2) rotates in direction "K1" and fastening strap (21) is pulled out. The ratchet tooth of the ratchet (3) pushes the curved pushing surface (431) of the locking rod (43) through the locating surface (31). Namely, the locking rod (43) is unable to lock the ratchet (3). When the fastening strap (21) is pulled out the appropriate length and pulling stops, the coil spring (5) applies forces to the reel (2), making the reel (2) tend to rotate in direction "K2" At this point, the abutting surface (432) of the locking rod (43) can abut on the guiding surface (32) of the ratchet tooth, so as to lock the ratchet (3) and prevent the reel (2) from retracting the fastening strap (21) again under the action of the coil spring (5).

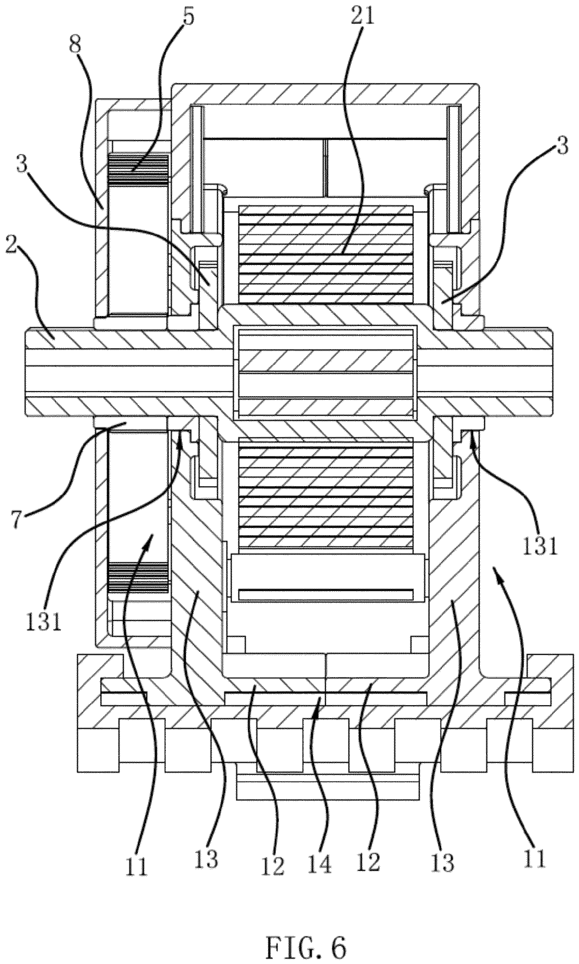

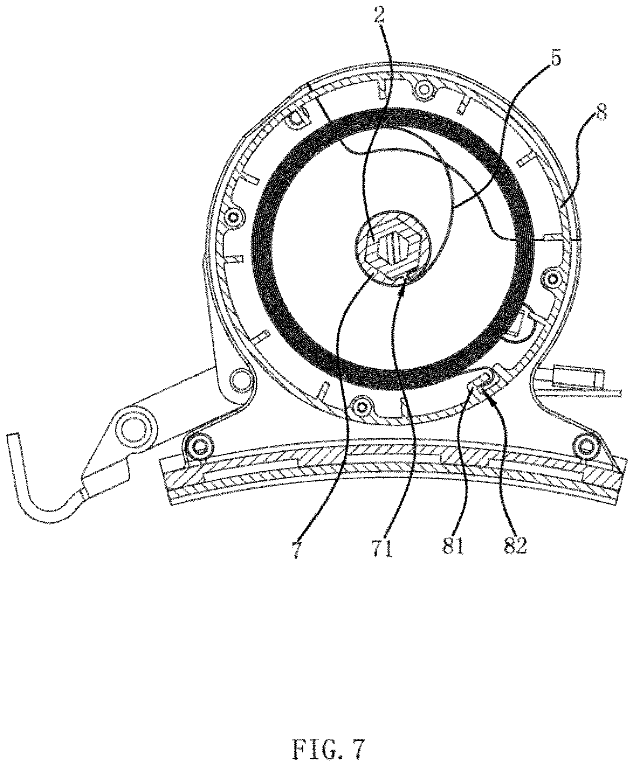

Specifically, as shown in Fig. 6 and Fig. 7, the shell (1) comprises two half shells (11). Both of the two half shells (11) comprise a curved base plate (12) and a side plate (13) fixed to the base plate (12). The two half shells (11) are connected by bolts, and the two base plate (12) abut on each other to form a tire blocking plate (14). A curved wedge plate (6) is fixed onto the tire blocking plate (14), and the reel (2) is rotatably inserted into the two side plates (13). A ratchet (3) is fixed the reel (2) on each inner side of the two side plates (13), so the locking piece (4) includes an axial part (41). Both ends of the axial part (41) comprise a pawl (42), and the axial part (41) and the pawl (42) are integrally formed by metal. The locking rod (43) is located on one end of the axial part (41) and made of plastic. Of course, the pawl (42) may also be made of rubber, as long as it has an adequate strength to withstand the elastic force of the coil spring (5). The counterweight block (44) is located in the middle of the axial part (41), and a rotating sleeve (47) is sleeved over both ends of the axial part (41). A mounting hole (131) is arranged on the side plate (13) of the shell (1), and the rotating sleeve (47) is rotatably connected inside the mounting hole (131), making the axial part (41) parallel to the reel (2). Both ends of the reel (2) stretches out of the side plates (13), and connecting sleeves (7) is sleeved over and fixed to one of the stretched ends. A connecting opening (71) is arranged on the connecting sleeve (7), and a cover (8) is also fixed to one side plate (13). There is a connecting bulge (81) on the inner circumferential wall of the cover (8), and an L-shaped slot (82) is arranged on the connecting bulge (81). The coil spring (5) is arranged inside the cover (8), and both ends of the coil spring (5) are bended into hook shapes. One end of the coil spring (5) hooks in the connecting opening (71) of the connecting sleeve (7), and the other end hooks in the L-shaped slot (82) of the connecting bulge (81).

### Second embodiment

This automatic strap retracting mechanism for wheel restraint devices is basically the same as that of the first embodiment. The differences are:
The locking piece (4) also comprises a counterweight rod (45), and both ends of the counterweight rod (45) are rotatably connected to the inner wall of the shell (1). The locking rod (43) and the pawl (42) are both fixed to the end of the counterweight rod (45), and the central part of the counterweight rod (45) bends to form a protruding counterweight part (46).

There is no need to arrange a counterweight block (44).

### List of Reference Numerals

- 1: Shell
- 11: Half Shell
- 12: Base Plate
- 13: Side Plate
- 131: Mounting Hole
- 14: Tire Blocking Plate
- 2: Reel
- 21: Fastening Strap
- 3: Ratchet
- 31: Locating Surface
- 32: Guiding Surface
- 4: Locking Piece
- 41: Axial Part
- 42: Pawl
- 43: Locking Rod
- 431: Curved Pushing Surface
- 432: Abutting Surface
- 44: Counterweight Block
- 45: Counterweight Rod
- 46: Counterweight Part
- 47: Rotating Sleeve
- 5: Coil Spring
- 6: Curved Wedge Plate
- 7: Connecting Sleeve
- 71: Connecting Opening
- 8: Cover
- 81: Connecting Bulge
- 82: L-Shaped Slot

## Claims

1. An automatic strap retracting mechanism for wheel restraint devices, comprising:
a shell (1);
a reel (2) rotatably connected inside the shell (2), the reel (2) being capable of winding in and retracting a fastening strap (21);
a ratchet (3) fixed onto the reel (2), the ratchet (3) having ratchet tooth surfaces;
a locating surface (31) of the ratchet tooth surfaces, the locating surface (31) being capable of preventing the fastening strap (21) from loosening;
a guiding surface (32) of the ratchet tooth surfaces, the guiding surface (32) capable of preventing the fastening strap (21) from tightening;
a locking piece (4) hinged to the shell (1); a pawl (42) of the locking piece (4), the pawl (42) being capable of abutting and locking onto the locating surface (31);
**characterized by**:
a locking rod (43) of the locking piece (4), the locking rod (43) being fixed to the pawl (42), forming an included angle between the locking rod (43) and the pawl (42); and
a coil spring (5) connected to the reel (2), the coil spring (5) being capable of rotating the reel (2) in a strap tightening direction to wind in and retract the fastening strap (21);
wherein when the pawl (42) detaches from the locating surface (31) and the fastening strap (21) is pulled out, the locking piece (4) is capable of swinging to allow the locking rod (43) to abut on the guiding surface (32).

2. The automatic strap retracting mechanism of Claim 1, further comprising:
a curved wedge plate (6) fixed to the shell (1), the curved wedge plate (6) being capable of abutting on a vehicle wheel; and
a counterweight block (44) of the locking piece (4), the counterweight block (44) capable of making the locking rod (43) abut on the guiding surface (32) of the ratchet (3) when the ratchet (3) rotates in a strap tightening direction;
wherein when the curved wedge plate (6) is placed facing downward, the locking rod (43) is below the pawl (42);

3. The automatic strap retracting mechanism of Claim 2, further comprising:
an axial part (41) of the locking piece (4), the axial part (41) being parallel to the reel (2), two ends of the axial part (41) are rotatably connected to an inner wall of the shell (1); and
the counterweight block (44) being fixed to the axial part (41);
wherein the locking rod (43) and the pawl (42) are located on at least one end of the axial part (41);
wherein when the curved wedge plate (6) is placed facing downward, the locking rod (43) and the counterweight block (44) are located respectively on two sides of a vertical plane containing the axial part (41); and
wherein under an action of the counterweight block (44), the locking rod (43) tends to swing upward and abuts on the ratchet (3).

4. The automatic strap retracting mechanism of Claim 1, further comprising:
a curved wedge plate (6) fixed to the shell (1), the curved wedge plate (6) capable of abutting on a vehicle wheel; and
a counterweight rod (45) of the locking piece (4), two ends of the counterweight rod (45) are rotatably connected to an inner wall of the shell (1);
wherein when the curved wedge plate (6) is placed facing downward, the locking rod (43) is below the pawl (42);
wherein the locking rod (43) and the pawl (42) are both fixed to the two ends of the counterweight rod (45);
wherein a central part of the counterweight rod (45) bends to form a protruding counterweight part (46); and
wherein when the curved wedge plate (6) is placed facing downward, the locking rod (43) and the counterweight part (46) are respectively located on two sides of a vertical plane containing an axis line linking the two ends of the counterweight rod (45).

5. The automatic strap retracting mechanism of Claims 3 or 4, further comprising:
a curved pushing surface (431) on the locking rod (43), the curved pushing surface (431) being located on a side of the locking rod (43); and
an abutting surface (432) located on an end of the locking rod (43);
wherein when the curved wedge plate (6) is placed facing downward and the ratchet (3) rotates in the strap loosening direction, the locating surface (31) is capable of pushing the curved pushing surface (431) downward; and
wherein when the ratchet (3) rotates in the strap tightening direction, the guiding surface (32) is capable of abutting on the abutting surface (432) of the locking rod (43).

6. The automatic strap retracting mechanism of Claim 3 wherein
the locking rod (43) is made of plastic or rubber, and the locking rod (43) is sleeved over and fixed to one end of the axial part (41); and
wherein the pawl (42) and the axial part (41) are of an integral structure.

7. The automatic strap retracting mechanism of Claim 3, further comprising:
mounting holes (131) arranged on side walls of the shell (1);
wherein the two ends of the axial part (41) are inserted in rotating sleeves (47); and
wherein the rotating sleeves (47) are rotatably connected inside the mounting holes (131).

8. The automatic strap retracting mechanism of any claim of Claims 1 through 4 wherein
the shell (1) comprises two half shells (11), both half shells (11) comprise curved base plates (12), and side plates (13) are fixed to the base plates (12);
wherein the two half shells (11) are fixed and connected to each other by bolts, and the two base plates (12) abut on each other to form a tire blocking plate (14); and
wherein the curved wedge plate (6) is fixed onto the tire blocking plate (14), and the reel (2) is rotatably connected to the side plates (13).

9. The automatic strap retracting mechanism of Claim 8, further comprising:
a cover (8) fixed to one side plate (13), the coil spring (5) arranged inside the cover (8);
wherein two stretched ends of the reel (2) stretch out of the side plates (13), and a connecting sleeve (7) is sleeved over and fixed to one of the stretched ends; and
wherein a first end of the coil spring (5) is fixed to the connecting sleeve (7), and a second end is fixed to an inner circumferential wall of the cover (8).

10. The automatic strap retracting mechanism of Claim 9, further comprising:
a connecting opening (71) arranged on the connecting sleeve (7);
a connecting bulge (81) on the inner circumferential wall of the cover (8); and
an L-shaped slot (82) arranged on the connecting bulge (81);
wherein two ends of the coil spring (5) are bended into hook shapes, the first end of the coil spring (5) hooks in the connecting opening (71) of the connecting sleeve (7), and the second end of the coil spring (5) hooks in the L-shaped slot (82) of the connecting bulge (81).

## Patentansprüche

1. Automatischer Riemenaufrollmechanismus für Radrückhaltevorrichtungen, umfassend:
ein Gehäuse (1); eine Spule (2), die drehbar innerhalb des Gehäuses (2) verbunden ist, wobei die Spule (2) in der Lage ist, einen Befestigungsriemen (21) aufzurollen und einzuziehen; eine Ratsche (3), die an der Spule (2) befestigt ist, wobei die Ratsche (3) Ratschenzahnoberflächen aufweist;
eine Kontaktfläche (31) der Ratschenzahnoberflächen, wobei die Kontaktfläche (31) in der Lage ist, zu verhindern, dass sich der Befestigungsriemen (21) löst; eine Führungsfläche (32) der Ratschenzahnoberflächen, wobei die Führungsfläche (32) in der Lage ist, zu verhindern, dass der Befestigungsriemen (21) festgezogen wird; ein Verriegelungsstück (4), das an dem Gehäuse (1) angelenkt ist; eine Sperrklinke (42) des Verriegelungsstücks (4), wobei die Sperrklinke (42) in der Lage ist, an der Kontaktfläche (31) anzuliegen und formschlüssig auf dieser anzusetzen;
**gekennzeichnet durch**: eine Verriegelungsstange (43) des Verriegelungsstücks (4), wobei die Verriegelungsstange (43) an der Sperrklinke (42) befestigt ist, sodass ein eingeschlossener Winkels zwischen der Verriegelungsstange (43) und der Sperrklinke (42) gebildet wird; und eine mit der Spule (2) verbundene Schraubenfeder (5), wobei die Schraubenfeder (5) in der Lage ist, die Spule (2) in eine Richtung zu drehen, in der der Riemen festgezogen wird, um den Befestigungsriemen (21) aufzurollen und einzuziehen; wobei, wenn sich die Sperrklinke (42) von der Kontaktfläche (31) löst und der Befestigungsriemen (21) herausgezogen wird, das Verriegelungsstück (4) schwenkbar ist, sodass ermöglicht wird, dass die Verriegelungsstange (43) formschlüssig an der Führungsfläche (32) ansetzt.

2. Automatischer Bandaufrollmechanismus nach Anspruch 1, ferner umfassend: eine gekrümmte Keilplatte (6), die am Gehäuse (1) befestigt ist, wobei die gekrümmte Keilplatte (6) in der Lage ist, an einem Fahrzeugrad anzuliegen; und einen Gegengewichtsblock (44) des Verriegelungsstücks (4), wobei der Gegengewichtsblock (44) in der Lage ist, die Verriegelungsstange (43) an der Führungsfläche (32) der Ratsche (3) anzulegen, wenn sich die Ratsche (3) in einer Bandaufrollrichtung dreht; wobei, wenn die gekrümmte Keilplatte (6) nach unten gerichtet angeordnet ist, sich die Verriegelungsstange (43) unterhalb der Sperrklinke (42) befindet;

3. Automatischer Bandaufrollmechanismus nach Anspruch 2, ferner umfassend: ein Axialteil (41) des Verriegelungsstücks (4), wobei das Axialteil (41) parallel zur Spule (2) angeordnet ist, zwei Enden des Axialteils (41), die drehbar mit einer Innenwand des Gehäuses (1) verbunden sind; und den Gegengewichtsblock (44), der an dem Axialteil (41) befestigt ist; wobei die Verriegelungsstange (43) und die Sperrklinke (42) an mindestens einem Ende des Axialteils (41) angeordnet sind: wobei, wenn die gekrümmte Keilplatte (6) nach unten gerichtet angeordnet ist, die Verriegelungsstange (43) und der Gegengewichtsblock (44) jeweils auf zwei Seiten einer vertikalen Ebene, die den Axialteil (41) enthält, angeordnet sind; und wobei unter Wirkung des Gegengewichtsblocks (44) die Verriegelungsstange (43) dazu neigt, nach oben zu schwenken und an der Ratsche (3) anliegt.

4. Automatischer Bandaufrollmechanismus nach Anspruch 1, ferner umfassend: eine gekrümmte Keilplatte (6), die an der Schale (1) befestigt ist, wobei die gekrümmte Keilplatte (6) in der Lage ist, an einem Fahrzeugrad anzuliegen; und eine Gegengewichtsstange (45) des Verriegelungsstücks (4), wobei zwei Enden der Gegengewichtsstange (45) drehbar mit einer Innenwand des Gehäuses (1) verbunden sind; wobei, wenn die gekrümmte Keilplatte (6) nach unten gerichtet angeordnet ist, die Verriegelungsstange (43) unterhalb der Sperrklinke (42) liegt; wobei die Verriegelungsstange (43) und die Sperrklinke (42) beide an den beiden Enden der Gegengewichtsstange (45) befestigt sind; wobei ein zentraler Teil der Gegengewichtsstange (45) sich biegt, um einen vorstehenden Gegengewichtsteil (46) zu bilden; und wobei, wenn die gekrümmte Keilplatte (6) nach unten gerichtet angeordnet ist, die Verriegelungsstange (43) und das Gegengewichtsteil (46) jeweils auf zwei Seiten einer vertikalen Ebene angeordnet sind, die eine Achsenlinie enthält, die die beiden Enden der Gegengewichtsstange (45) verbindet.

5. Automatischer Bandaufrollmechanismus nach Anspruch 3 oder 4, ferner umfassend: eine gekrümmte Druckfläche (431) an der Verriegelungsstange (43), die gekrümmte Druckfläche (431), die sich auf einer Seite der Verriegelungsstange (43) befindet; und eine Anlegefläche (432), die sich an einem Ende der Verriegelungsstange (43) befindet; wobei, wenn die gekrümmte Keilplatte (6) nach unten gerichtet angeordnet ist und die Ratsche (3) in die Richtung dreht, in der der Riemen sich löst, die Kontaktfläche (31) in der Lage ist, die gekrümmte Druckfläche (431) nach unten zu drücken; und wobei, wenn sich die Ratsche (3) in die Richtung dreht, in der der Riemen festgezogen wird, die Führungsfläche (32) in der Lage ist, an der Anlegefläche (432) der Verriegelungsstange (43) anzulegen.

6. Automatischer Riemenaufrollmechanismus nach Anspruch 3, worin die Verriegelungsstange (43) aus Kunststoff oder Gummi besteht und die Verriegelungsstange (43) mit einer Hülse versehen ist und an einem Ende des Axialteils (41) befestigt ist; und wobei die Sperrklinke (42) und das Axialteil (41) eine integrale Struktur sind.

7. Automatischer Bandaufrollmechanismus nach Anspruch 3, ferner umfassend: Montagelöcher (131), die an den Seitenwänden des Gehäuses (1) angeordnet sind; wobei die beiden Enden des Axialteils (41) in rotierende Hülsen (47) eingesetzt sind; und wobei die rotierenden Hülsen (47) innerhalb der Befestigungslöcher drehbar verbunden sind (131).

8. Automatischer Bandaufrollmechanismus nach einem der Ansprüche 1 bis 4 wobei das Gehäuse (1) zwei Halbschalen (11) umfasst, beide Halbschalen (11) gekrümmte Grundplatten (12) umfassen, und Seitenplatten (13) an den Grundplatten (12) befestigt sind; wobei die zwei Halbschalen (11) befestigt und durch Schrauben miteinander verbunden sind, und die beiden Grundplatten (12) aneinander anliegen, um eine Reifenblockierplatte (14) zu bilden; und wobei die gekrümmte Keilplatte (6) an der Reifenblockierplatte (14) befestigt ist und die Spule (2) drehbar mit den Seitenplatten (13) verbunden ist.

9. Automatischer Bandaufrollmechanismus nach Anspruch 8, ferner umfassend: eine Abdeckung (8), die an einer Seitenplatte (13) befestigt ist, wobei die Schraubenfeder (5) innerhalb der Abdeckung angeordnet ist (8); wobei zwei gestreckte Enden der Rolle (2) sich aus den Seitenplatten (13) heraus erstrecken, und eine Verbindungshülse (7) über eines der gestreckten Enden gesteckt und an diesem befestigt ist; und wobei ein erstes Ende der Schraubenfeder (5) an der Verbindungshülse (7) und ein zweites Ende an einer Innenumfangswand der Abdeckung (8) befestigt ist.

10. Automatischer Bandaufrollmechanismus nach Anspruch 9, ferner umfassend: eine Verbindungsöffnung (71), die an der Verbindungshülse (7) angeordnet ist; eine Verbindungswulst (81) an der inneren Umfangswand der Abdeckung (8); und einen L-förmigen Schlitz (82) der Verbindungswulst (81); wobei zwei Enden der Schraubenfeder (5) zu Hakenformen gebogen sind, wobei das erste Ende der Schraubenfeder (5) in der Verbindungsöffnung (71) der Verbindungshülse (7) einhakt und das zweite Ende der Schraubenfeder (5) in den L-förmigen Schlitz (82) der Verbindungswulst (81) einhakt

## Revendications

1. Un mécanisme automatique de courroie rétractable pour dispositifs de retenue de roue, comprenant :
une coquille (1) ;
un enrouleur (2) connecté de manière rotative à l'intérieur de la coquille (2), l'enrouleur (2) étant capable d'enrouler et rétracter une courroie de fixation (21) ;
un rochet (3) fixé sur l'enrouleur (2), le rochet (3) possédant des surfaces de dent de rochet;
une surface de positionnement (31) des surfaces de dent de rochet, la surface de positionnement (31) étant capable d'empêcher la courroie de fixation (21) de se desserrer ;
une surface de guidage (32) des surfaces de dent de rochet, la surface de guidage (32) capable d'empêcher la courroie de fixation (21) de se resserrer ;
une pièce de verrouillage (4) articulée à la coquille (1) ;
un cliquet (42) de la pièce de verrouillage (4), le cliquet (42) étant capable d'être adossé et verrouillé sur la surface de positionnement (31) ;
**caractérisé par** :
une tige de verrouillage (43) de la pièce de verrouillage (4), la tige de verrouillage (43) étant fixée au cliquet (42), formant un angle inclus entre la tige de verrouillage (43) et le cliquet (42) ; et
un ressort hélicoïdal (5) connecté à l'enrouleur (2), le ressort hélicoïdal (5) étant capable de faire tourner l'enrouleur (2) dans un sens de resserrage de la courroie pour enrouler et rétracter la courroie de fixation (21) ;
où lorsque le cliquet (42) se détache de la surface de positionnement (31) et que la courroie de fixation (21) est tirée, la pièce de verrouillage (4) est capable de basculer pour permettre à la tige de verrouillage (43) de s'adosser à la surface de guidage (32).

2. Le mécanisme automatique de courroie rétractable de la revendication 1, comprenant en outre :
une plaque à bord incurvé (6) fixée à la coquille (1), la plaque à bord incurvé (6) étant capable d'être adossée à une roue de véhicule ; et
un élément de contrepoids (44) de la pièce de verrouillage (4), l'élément de contrepoids (44) capable d'adosser la tige de verrouillage (43) à la surface de guidage (32) du rochet (3) lorsque le rochet (3) tourne dans un sens de resserrage de la courroie ;
où lorsque la plaque à bord incurvé (6) est placée regardant vers le bas, la tige de verrouillage (43) est en dessous du cliquet (42) ;

3. Le mécanisme automatique de courroie rétractable de la revendication 2, comprenant en outre :
une partie axiale (41) de la pièce de verrouillage (4), la partie axiale (41) étant parallèle à l'enrouleur (2), deux extrémités de la partie axiale (41) sont connectées de manière rotative à une paroi interne de la coquille (1) ; et
l'élément de contrepoids (44) étant fixé à la partie axiale (41) ;
où la tige de verrouillage (43) et le cliquet (42) sont situés sur au moins une extrémité de la partie axiale (41) ;
où lorsque la plaque à bord incurvé (6) est placée regardant vers le bas, la tige de verrouillage (43) et l'élément de contrepoids (44) sont situés respectivement sur deux côtés d'un plan vertical contenant la partie axiale (41) ; et
où sous une action de l'élément de contrepoids (44), la tige de verrouillage (43) tend à basculer vers le haut et à s'adosser au rochet (3).

4. Le mécanisme automatique de courroie rétractable de la revendication 1, comprenant en outre :
une plaque à bord incurvé (6) fixée à la coquille (1), la plaque à bord incurvé (6) capable de s'adosser à une roue de véhicule ; et
une tige de contrepoids (45) de la pièce de verrouillage (4), deux extrémités de la tige de contrepoids (45) sont connectées de manière rotative à une paroi interne de la coquille (1) ;
où lorsque la plaque à bord incurvé (6) est placée regardant vers le bas, la tige de verrouillage (43) est en dessous du cliquet (42) ;
où la tige de verrouillage (43) et le cliquet (42) sont tous les deux fixés aux deux extrémités de la tige de contrepoids (45) ;
où une partie centrale de la tige de contrepoids (45) plie pour former une partie de contrepoids faisant saillie (46) et ;
où lorsque la plaque à bord incurvé (6) est placée regardant vers le bas, la tige de verrouillage (43) et la partie de contrepoids (46) sont situées respectivement sur deux côtés d'un plan vertical contenant une ligne axiale reliant les deux extrémités de la tige de contrepoids (45).

5. Le mécanisme automatique de courroie rétractable des revendications 3 ou 4, comprenant en outre :
une surface de poussage incurvée (431) sur la tige de verrouillage (43), la surface de poussage incurvée (431) étant située d'un côté de la tige de verrouillage (43) ; et
une surface d'adossement (432) située sur une extrémité de la tige de verrouillage (43) ;
où lorsque la plaque à bord incurvé (6) est placée regardant vers le bas et que le rochet (3) tourne dans le sens de desserrage de la courroie, la surface de positionnement (31) est capable de pousser la surface de poussage incurvée (431) vers le bas ; et
où lorsque le rochet (3) tourne dans le sens de resserrage de la courroie, la surface de guidage (32) est capable de s'adosser à la surface d'adossement (432) de la tige de verrouillage (43).

6. Le mécanisme automatique de courroie rétractable de la revendication 3 où
la tige de verrouillage (43) est fabriquée en plastique ou caoutchouc, et la tige de verrouillage (43) est manchonnée et fixée à une extrémité de la partie axiale (41) ; et
où le cliquet (42) et la partie axiale (41) sont d'une structure intégrale.

7. Le mécanisme automatique de courroie rétractable de la revendication 3, comprenant en outre :
des trous de montage (131) situés sur les parois latérales de la coquille (1) ;
où les deux extrémités de la partie axiale (41) sont insérées dans des manchons rotatifs (47) ; et
où les manchons rotatifs (47) sont connectés de manière rotative à l'intérieur des trous de montage (131).

8. Le mécanisme automatique de courroie rétractable de l'une quelconque des revendications 1 à 4 où
la coquille (1) comprend deux demi-coquilles (11), les deux demi-coquilles (11) comprennent des plaques de base incurvées (12), et des plaques latérales (13) sont fixées aux plaques de base (12) ;
où les deux demi-coquilles (11) sont fixées et connectées l'une à l'autre par des boulons, et les deux plaques de base (12) sont adossées l'une à l'autre pour former une plaque de blocage de pneu (14) ; et
où la plaque à bord incurvé (6) est fixée sur la plaque de blocage de pneu (14), et l'enrouleur (2) est connecté de manière rotative aux plaques latérales (13).

9. Le mécanisme automatique de courroie rétractable de la revendication 8, comprenant en outre :
un couvercle (8) fixé à une plaque latérale (13), le ressort hélicoïdal (5) disposé à l'intérieur du couvercle (8) ;
où deux extrémités étirées de l'enrouleur (2) s'étirent des plaques latérales (13), et un manchon de connexion (7) est manchonné sur et fixé à l'une des extrémités étirées ; et
où une première extrémité du ressort hélicoïdal (5) est fixée au manchon de connexion (7), et une seconde extrémité est fixée à une paroi circonférentielle interne du couvercle (8).

10. Le mécanisme automatique de courroie rétractable de la revendication 9, comprenant en outre :
une ouverture de connexion (71) placée sur le manchon de connexion (7) ;
un renflement de connexion (81) sur la paroi circonférentielle interne du couvercle (8) ; et
une encoche en forme de L (82) placée sur le renflement de connexion (81) ;
où deux extrémités du ressort hélicoïdal (5) sont pliées en forme de crochets, la première extrémité du ressort hélicoïdal (5) s'accroche dans l'ouverture de connexion (71) du manchon de connexion (7), et la seconde extrémité du ressort hélicoïdal (5) s'accroche dans l'encoche en forme de L (82) du renflement de connexion (81).
